(19) Europäisches Patentamt
European Patent Office
Office européen des brevets

(11) **EP 4 113 386 A2**

(12) **EUROPEAN PATENT APPLICATION**

(43) Date of publication:
**04.01.2023 Bulletin 2023/01**

(21) Application number: **22185974.7**

(22) Date of filing: **20.07.2022**

(51) International Patent Classification (IPC):
**G06N 3/04** *(2006.01)*     **G06N 3/08** *(2006.01)*

(52) Cooperative Patent Classification (CPC):
**G06N 3/0454; G06N 3/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2021 CN 202111613130**

(71) Applicant: **BEIJING BAIDU NETCOM SCIENCE AND TECHNOLOGY CO. LTD.**
**100085 Beijing (CN)**

(72) Inventors:
• **LIU, Ji**
  **Beijing, 100085 (CN)**
• **MA, Beichen**
  **Beijing, 100085 (CN)**
• **ZHOU, Chendi**
  **Beijing, 100085 (CN)**
• **ZHOU, Jingbo**
  **Beijing, 100085 (CN)**
• **ZHOU, Ruipu**
  **Beijing, 100085 (CN)**
• **DOU, Dejing**
  **Beijing, 100085 (CN)**

(74) Representative: **Nederlandsch Octrooibureau**
**P.O. Box 29720**
**2502 LS The Hague (NL)**

(54) **METHOD, APPARATUS AND SYSTEM FOR FEDERATED LEARNING, ELECTRONIC DEVICE, COMPUTER READABLE MEDIUM**

(57)    The present disclosure provides a method and apparatus for federated learning, which relate to the technical fields such as big data and deep learning. A specific implementation is: generating, for each task in a plurality of different tasks trained simultaneously, a global model for each task; receiving resource information of each available terminal in a current available terminal set; selecting a target terminal corresponding to each task from the current available terminal set, based on the resource information and the global model; and training the global model using the target terminal until a trained global model for each task meets a preset condition. This implementation improves the efficiency of federated learning.

Fig. 1

EP 4 113 386 A2

**Description**

TECHNICAL FIELD

The present disclosure relates to the field of computer technologies, specifically to the technical fields of big data and deep learning, and more specifically to a method, apparatus and system for federated learning, an electronic device, a computer readable storage medium, and a computer program product.

BACKGROUND

In recent years, a large amount of decentralized data has appeared in a plurality of devices of end users, and the aggregation of the decentralized data is still difficult for machine learning work due to laws and regulations. Federated machine learning (FL) is an effective method in which sensitive raw data is not shared and a plurality of terminals train global machine learning models collaboratively.

Current FL solutions focus on single-task or multi-task jobs, and for a plurality of FL jobs, simultaneous training is still an outstanding problem.

SUMMARY

The present disclosure provides a method, apparatus and system for federated learning, an electronic device, a computer readable storage medium, and a computer program product.

According to a first aspect, a method for federated learning is provided. The method includes: generating, for each task in a plurality of different tasks trained simultaneously, a global model for each task; receiving resource information of each available terminal in a current available terminal set; selecting a target terminal corresponding to each task from the current available terminal set, based on the resource information and the global model; and training the global model using the target terminal until a trained global model for each task meets a preset condition.

According to a second aspect, an apparatus for federated learning is provided. The apparatus includes: a generation unit, configured to generate, for each task in a plurality of different tasks trained simultaneously, a global model for each task; a receiving unit, configured to receive resource information of each available terminal in a current available terminal set; a selection unit, configured to select a target terminal corresponding to each task from the current available terminal set, based on the resource information and the global model; and a training unit, configured to train the global model using the target terminal until a trained global model for each task meets a preset condition.

According to a third aspect, a system for federated learning is provided. The system includes: a server and an available terminal set including a plurality of available terminals, where the server is configured to: generate, for each task in a plurality of different tasks trained simultaneously, a global model for each task; receive resource information of each available terminal in a current available terminal set; select a target terminal corresponding to each task from the current available terminal set, based on the resource information and the global model; and train the global model using the target terminal until a trained global model for each task meets a preset condition.

According to a fourth aspect, a non-transitory computer readable storage medium storing computer instructions is provided. The computer instructions, when executed by a computer, cause the computer to perform the method as described in any implementations of the first aspect.

According to a fifth aspect, a computer program product including a computer program is provided. The computer program, when executed by a processor, implements the method as described in any implementations of the first aspect.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings are used for better understanding of the present solution, and do not constitute a limitation to the present disclosure.

Fig. 1 is a flowchart of an embodiment of a method for federated learning according to the present disclosure;

Fig. 2 is a flowchart of another embodiment of the method for federated learning according to the present disclosure;

Fig. 3 is a schematic structural diagram of a federated learning architecture using a deep learning model according to the present disclosure;

Fig. 4 is a schematic structural diagram of an embodiment of an apparatus for federated learning according to the present disclosure;

Fig. 5 is a schematic structural diagram of an embodiment of a system for federated learning according to the present disclosure; and

Fig. 6 is a block diagram of an electronic device used to implement the method for federated learning according to embodiments of the present disclosure.

# DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

The traditional federated learning method is applied to a server in a system for federated learning. The system for federated learning includes a server and a plurality of terminal devices. The system for federated learning is used to complete tasks. In an FL training process, raw data of the terminal devices remains decentralized without moving to a single server. FL only allows intermediate data to be transmitted between the terminal devices, and the intermediate data may be a weight or gradient of a model. FL typically uses a parameter server architecture, where a server (or a group of servers) coordinates the training process with many devices. To co-train a global model, the server updates local models based on (by scheduling) local data from a plurality of devices, and then aggregates the local models to obtain a new global model. This process is repeated multiple times to generate a high-accuracy global model. Specifically, global model training steps are as follows: the first step is generating, by the server, a global model for a task; the second step is selecting an available terminal device for the task from a plurality of terminal devices by using some scheduling algorithms (e.g., greedy algorithm, random scheduling algorithm, genetic algorithm); the third step is distributing the global model to the available terminal device; the fourth step is updating and training, by the terminal device, the global model based on the local data after the terminal device receives the global model, and uploading parameters of the updated global model to the server after the terminal device completes its local training ; and the fifth step is aggregating, by the server, the parameters of the updated global model of the terminal device to generate a new global model. The first to fifth steps are one round of iterative training, and multiple rounds of iterative training are repeatedly performed for a task until the global model corresponding to the task reaches expected performance (accuracy, loss value or convergence).

The traditional federated learning method focuses on single-task or multi-task jobs. A difference between single-task jobs and multi-task jobs is that tasks of single-task jobs share some parts of the model, while multi-task jobs have no interaction with each other on the model. Multi-task jobs handle a simultaneous training process of a plurality of independent jobs. Each job corresponds to multiple updates of the local model during global model training process. Although using a single-task job usually selects some of the terminal devices to update the global model, other terminal devices are still idle and the efficiency is low. Multi-task jobs may make good use of different terminal devices in the FL system to perform a plurality of task jobs at the same time, which brings higher efficiency. During training process of multi-task jobs, devices need to be scheduled into each task job. At a given time, one device can only be scheduled into one task job, and one task job needs to schedule a plurality of available devices to participate in the training. Usually, devices with strong computing power may be scheduled into the task job to speed up the training process, while other devices should also participate in the training process to increase fairness of the data to improve the accuracy of a final global model, where the fairness of the data refers to the fair participation of data in the FL training process, which may be represented by a standard deviation of the number of times all devices are scheduled by a single task job. The scheduling problem of the terminal devices is a typical NP (Non-deterministic polynomial-time) problem. Some solutions have been proposed in the scheduling algorithms used in the traditional training process of FL, but the algorithms usually only focus on using single-task jobs. Furthermore, these algorithms cannot simultaneously address heterogeneity of the devices and the data fairness in the training process, which may lead to lower convergence accuracy of the global model.

To efficiently schedule available device resources, these tasks may be trained in parallel. Since each device can only update one task model in a given time period, how to reasonably schedule device resources between different tasks is very critical. Due to the heterogeneity of the devices, some devices may have high computing and communication capabilities. In addition, the data fairness of a plurality of devices may also affect a convergence speed of the training process. For example, if only certain high-performance devices are scheduled into a task, the model can only learn information from data stored on these devices, while information from data stored on other devices may be missed. In order to accelerate the training process of a plurality of tasks with high accuracy, it is critical to consider how to schedule devices efficiently, taking into account the computing and communication capabilities of the devices and the fairness of the data at the same time. For example, the server will select as many devices as possible for a single task within limited time of each round, so that the task converges as quickly as possible. If the total completion time of the task decreases, the server still only considers the current task each time a device is selected. In addition, it cannot consider the impact of a current scheduling scheme on other tasks, nor how to more reasonably schedule device resources for each task to minimize convergence time.

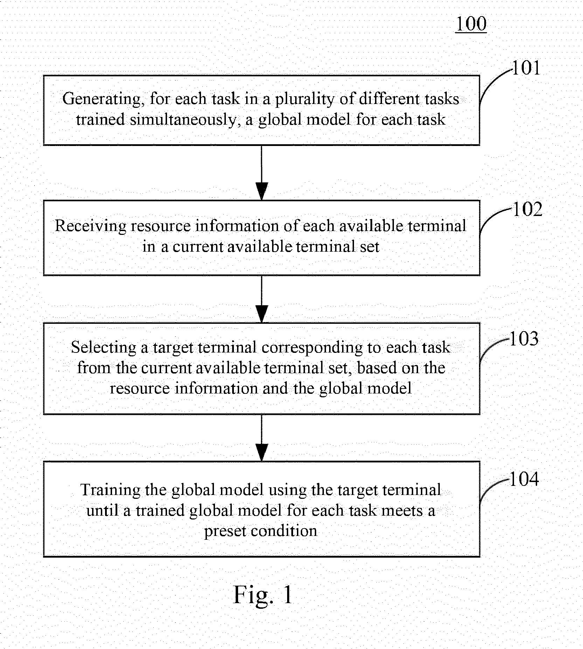

In view of the fact that the traditional federated learning method does not fully consider the heterogeneity of the devices and the data fairness in the training process, the present disclosure proposes a method for federated learning, which may be used in a parallel training process of a plurality of task jobs. Compared with the traditional federated learning method, the selection process of a target terminal is optimized, and Fig. 1 shows a flow 100 of an embodiment of a method for federated learning according to the present disclosure. The method for federated learning includes the following steps:

Step 101, generating, for each task in a plurality of different tasks trained simultaneously, a global model for each task.

In the present embodiment, the plurality of different tasks are tasks that a system for federated learning needs to learn, and the tasks are alternatively referred to as federated learning tasks, such as image classification, speech recognition, text generation, or other tasks. By training the plurality of tasks simultaneously, terminal devices of the system for federated learning may be efficiently scheduled, and the plurality of tasks are trained in the system for federated learning at the same time. A target terminal used by each task in each iterative training of a plurality of iterative training processes may be the same or different, but when the plurality of different tasks are trained at the same time, the target terminals used by the tasks are completely different.

In the present embodiment, a task is one of the of different tasks trained simultaneously, a global model is set for the task, the global model is distributed to a target terminal corresponding to the task, and the target terminal corresponding to the task may be more than two available terminals in the system for federated learning (the system for federated learning includes a server and at least one available terminal communicatively connected to the server).

In the present embodiment, an executing body on which the method for federated learning runs may generate a corresponding global model for each of the plurality of different tasks, and a generation process of the global model is a mature technology, and detailed description thereof will be omitted.

In the technical solution of the present disclosure, the processes of the collection, storage, use, processing, transmission, provision, and disclosure of the data involved in the generation of a global model by the executing body on which the method for federated learning runs are performed after authorization and in compliance with relevant laws and regulations.

Step 102, receiving resource information of each available terminal in a current available terminal set.

In the present embodiment, the current available terminal set includes a plurality of available terminals, and the plurality of available terminals are idle terminal devices in the system for federated learning that are connected to the server (which may be the executing body on which the method for federated learning of the present disclosure runs). After selecting a global model for each task, the executing body on which the method for federated learning runs communicates with the terminal devices in the system for federated learning, and gathers all determined idle terminal devices as the available terminal set.

In the present embodiment, the resource information reflects resources currently owned by the available terminal or the usage situation of the available terminal. Alternatively, the resource information includes: a memory of the available terminal, GPU (graphics processing unit), RAM (random access memory), a size of local data, and the number and frequency of the available terminal being invoked by the task.

Step 103, selecting a target terminal corresponding to each task from the current available terminal set, based on the resource information and the global model.

In the present embodiment, the target terminal of each task is at least one available terminal in the available terminal set, and the target terminal of each task may locally train the global model for each task, so that the trained global model meets a preset condition.

In the present embodiment, a corresponding relationship table between a target terminal and a combination of resource information and a global modelmay be preset, and after the resource information of the available terminal and the global model for each task are obtained, the corresponding target terminal of each task may be obtained by querying the corresponding relationship table.

In practice, the training of each task in FL consists of multiple rounds, and a resource condition and availability of each available terminal in the available terminal set are dynamically changing, therefore, scheduling schemes of all rounds of each task cannot be generated at one time, instead, based on a training condition of a current round of each task, dynamic scheduling of a target terminal is performed in each round for each task.

In the present embodiment, the amount of resource occupied by global models of different tasks is different.

Based on the resource information of the available terminals and the global models, the target terminals of the tasks may be determined, and all target terminals in the current available terminal set that can serve the tasks may be extracted to serve the tasks.

Step 104, training the global model using the target terminal until the trained global model for each task meets a preset condition.

In the present embodiment, a global model for a task in the plurality of different tasks is trained through multiple rounds of iterative training, to obtain a trained global model. Compared with the initially generated global model, parameters of the trained global model have changed, and the trained global model may effectively execute the task in the plurality of different tasks, and obtain an execution result of the task in the plurality of different tasks.

In the present embodiment, by setting a preset condition, it may be effectively determined whether the training process of the global model is completed, and after the trained global model meets the preset condition, the federated learning of the task is completed.

In the present embodiment, the above preset condition includes at least one of the following: the number of rounds of iterative training of the global model reaches a predetermined iteration threshold, a loss value of the global model is less than a predetermined loss value threshold, or an accuracy of the global model reaches a predetermined accuracy threshold. The predetermined iteration threshold is an empirical value obtained based on the loss value of the global model. For example, the predetermined iteration threshold of the global model is 30,000 times. The predetermined loss value threshold of the global model is 0.01, and the accuracy of the global model reaches 0.001.

Alternatively, when the global model is trained using the target terminal, in response to the global model not meeting the preset condition, relevant parameters of the global model are adjusted locally on the target terminal, so that the loss value of the global model obtained by the executing body on which the method for federated learning runs converges, and based on the adjusted global model, the executing body continues to perform the above training steps 102-104.

In this alternative implementation, when the global model does not meet the preset condition, relevant parameters of a global model network are adjusted to help the convergence of the global model.

Alternatively, the training the global model using the target terminal until the trained global model for the task meets a preset condition, includes:

distributing the global model for the task to the target terminal, so that the target terminal performs local training on the global model to obtain model parameters; receiving the model parameters returned by the target terminal, and aggregating the model parameters to obtain an updated global model; and in response to the updated global model not meeting the preset condition, replacing the global model with the updated global model, and continuing to train the global model using the target terminal until the trained global model for the task meets the preset condition.

In the present embodiment, in response to the updated global model meeting the preset condition, the updated global model that meets the preset condition is used as the model for the task. This alternative implementation may ensure that the target terminal of each task remains unchanged.

In some alternative implementations of the present embodiment, the training the global model using the target terminal until the trained global model for the task meets a preset condition, further includes: in response to the updated global model not meeting the preset condition, replacing the global model with the updated global model, continuing to receive resource information of each available terminal in the current available terminal set, and selecting a target terminal corresponding to the task from the current available terminal set, based on the resource information and the global model; distributing the global model to the target terminal, so that the target terminal performs local training on the global model to obtain model parameters; receiving the model parameters returned by the target terminal, and aggregating the model parameters to obtain the updated global model; and determining that the trained global model for the task meets the preset condition, in response to the updated global model meeting the preset condition.

In this alternative implementation, after iterative training is performed on a global model for any task in the plurality of tasks and the updated global model does not meet the preset condition, a target terminal corresponding to the task is re-selected in the next iterative training, therefore, when target terminals of the task cannot be generated at one time, based on the training situation of the current round of the task, the target terminal is re-selected, and for each task, target terminals are dynamically scheduled in each round of iterative training, which improves an invoking efficiency of available terminals in the available terminal set.

According to the method for federated learning provided by an embodiment of the present disclosure, first, for each task in a plurality of different tasks trained simultaneously, a global model for each task is generated; secondly, resource information of each available terminal in a current available terminal set is received; then a target terminal corresponding to each task is selected from the current available terminal set based on the resource information and the global model; and finally the global model is trained using the target terminal until the trained global model for the task meets a preset condition. Therefore, after the global model is generated, the target terminal corresponding to the task is selected based on the global model and the resource information of each available terminal in the current available terminal set, and the target terminal is selected based on the global model for the task and the resource information of the available terminal, which improves the reliability and rationality of selecting the target terminal, fully considers the fairness of multi-task data, and improves the efficiency of multi-task federated learning.

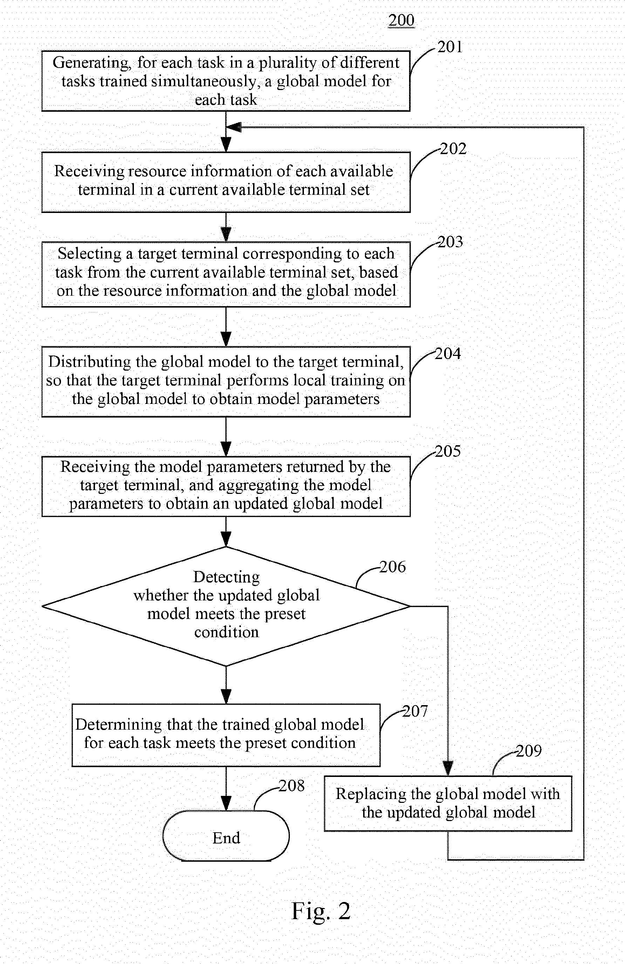

In order to effectively illustrate the iterative training process of the global model, Fig. 2 shows a flow 200 of another embodiment of the method for federated learning according to the present disclosure, and the method for federated learning includes the following steps:

Step 201, generating, for each task in a plurality of different tasks trained simultaneously, a global model for each task.

Step 202, receiving resource information of each available terminal in a current available terminal set.

Step 203, selecting a target terminal corresponding to each task from the current available terminal set, based on the resource information and the global model.

It should be understood that the operations and features in the above steps 201 to 203 correspond to the operations and features in steps 101 to 103 respectively. Therefore, the above descriptions of the operations and features in steps 101 to 103 are also applicable to steps 201 to 203, and detailed description thereof will be omitted.

Step 204, distributing the global model to the target terminal, so that the target terminal performs local training on the global model to obtain model parameters.

Step 205, receiving the model parameters returned by the target terminal, and aggregating the model parameters to obtain an updated global model.

Step 206, detecting whether the updated global model meets the preset condition; and if it is detected that the updated global model meets the preset condition, performing step 207; or if it is detected that the updated global model does not meet the preset condition, performing step 209.

Step 207, determining that the trained global model for the task meets the preset condition.

Step 208, end.

Step 209, replacing the global model with the updated global model, and performing step 202.

In the method for federated learning provided by the present embodiment, when the updated global model meets the preset condition, it is determined that the trained global model for the task meets the preset condition; and when the updated global model does not meet the preset condition, the global model is replaced with the updated global model, and it continues to select the target terminal corresponding to the task, so that the target terminal is dynamically adjusted for each task in each round of iterative training and a convergence effect of the global model is ensured.

In some alternative implementations of the present embodiment, the selection of the target terminal may be realized by using a deep learning model. The selecting a target terminal corresponding to the task from the current available terminal set, based on the resource information and the global model, includes: inputting the current available terminal set, the resource information of the current available terminal set, and parameters of the global model into a pre-trained deep learning model, to obtain target terminal information output by the deep learning model, the target terminal information and corresponding to each task and being used to represent a probability of invoking each available terminal in the current available terminal set; where, the deep learning model is used to represent a corresponding relationship between the target terminal information and a combination of the parameters of the global model, the available terminal set and the resource information of each available terminal in the available terminal set; and selecting the target terminal corresponding to the task from the current available terminal set based on the target terminal information.

In the present embodiment, the target terminal information is used to represent the probability of invoking each available terminal in the current available terminal, the selecting the target terminal corresponding to each task from the current available terminal set based on the target terminal information, includes: sorting the probabilities of invoking all available terminals in the available terminal set in descending order, and selecting an available terminal with a previously set bit as the target terminal. The set bit may be determined based on training requirements of the global model, for example, the set bit is 3.

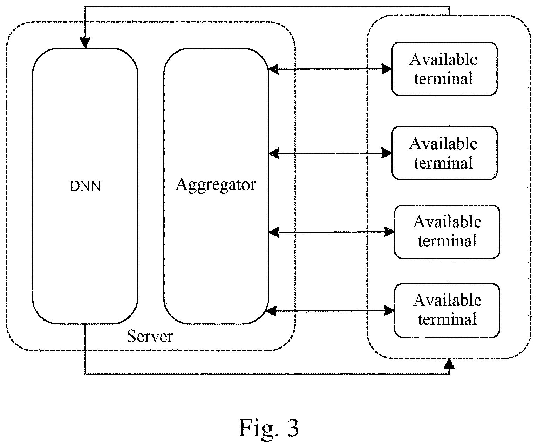

As shown in Fig. 3, the server of the system for federated learning includes: a deep learning model DNN and an aggregator, where the deep learning model DNN receives an available terminal set, resource information of each available terminal, and a global model, and outputs a target terminal.

The server first generates and initializes global model for a current task. The initialization may be achieved by randomly generating parameters or during a pre-training process of public data. To obtain current states of the devices, 1) the server sends a request to all available terminals to acquire the resource information; then, 2) the server generates target terminals for the task based on the global model and the resource information, and the target terminals are terminal selected to perform local training of the global model for the task. It should be noted that the scheduling processes of target terminals of a plurality of tasks occurs in parallel; 3) The server distributes the global model of the current task to the target terminals; then 4) the global model is updated on each of the target terminals based on local data; and subsequently, 5) the target terminals upload the updated models to the server after the local training is performed; and finally, 6) the server aggregates the updated global models of the target terminals to generate a new global model. Steps 1)-6) are represented by one round of iterative training, which is repeatedly performed for each task until a corresponding global model for each task reaches expected performance (accuracy, loss value, or convergence). It should be noted that a plurality of tasks are executed asynchronously in parallel, and one available terminal can only be scheduled to one task at a given time. In addition, the importance of each task may be the same.

A global learning problem of multi-task federated learning may be expressed by the following formula (1):

$$\min_{W} \sum_{m=1}^{M} \mathbb{L}_m, \quad \text{with} \quad \mathbb{L}_m = \sum_{k=1}^{K} \frac{D_k^m}{D^m} F_k^m(\omega^m),$$
$$(1)$$

where $\mathbb{L}_m$ is a loss function of task m, $F_k^m(\omega^m) = \frac{1}{D_k^m} \sum_{\{x_{k,\ d}^m, y_{k,\ d}^m\} \in \mathcal{D}_k^m} f^m(\omega^m, x_{k,\ d}^m, y_{k,\ d}^m)$

is a loss of the task m on model k. $W := \{w^1, w^2, ..., w^m\}$ is a set of weights of models for all tasks. $f^m(w^m; x_{k,d}^m, y_{k,d}^m)$

is a model loss of an input and output data pair { $x_{k,d}^m, y_{k,d}^m$ } of the m$^{th}$ task with parameter $w^m$.

The method for selecting a target terminal corresponding to a task provided by this alternative implementation uses the pre-trained deep learning model, and outputs the target terminal information, which improves the reliability of selecting the target terminal and ensures the efficiency of federated learning.

In the present embodiment, the deep learning model is obtained by training using training steps as follows: acquiring sample terminals corresponding to a plurality of sample tasks and resource information of each sample terminal; inputting a corresponding sample terminal, resource information of the sample terminal, and parameters of a sample global model during each round of iterative training of each task in the plurality of tasks into a pre-built deep learning network, to obtain target terminal information output by the deep learning network; and obtaining the deep learning model, in response to a loss value of a loss function of the deep learning network reaching a preset loss value.

In the present embodiment, by minimizing the loss value of the loss function of the deep learning network, the deep learning network may be gradually converged until the loss value of the loss function of the deep learning network reaches the preset loss value. It should be noted that the preset loss value may be set based on training requirements of the deep learning network.

Alternatively, after the loss value of the loss function of the deep learning network reaches the preset loss value, it is also possible to detect whether the deep learning network reaches a preset number of iterations, and in response to the deep learning network reaching the preset number of iterations, the deep learning network is used as the deep learning model.

In this alternative implementation, the corresponding sample terminal, the resource information of the sample terminal, and the parameters of the sample global model during each round of iterative training of each task in a plurality of tasks are input into the deep learning network, which provides a basis for the deep learning network to provide reliable target terminal information and ensures the reliability of the obtained deep learning model.

In some alternative implementations of the present embodiment, the loss function of the deep learning network includes: a time loss function and a data fairness loss function. The time loss function is used to represent a loss of an execution duration of the terminal invoked during each round of iterative training of the sample global model corresponding to the task; and the data fairness loss function is used to represent a loss of variance of a frequency of the terminal invoked during each round of iterative training of the sample global model corresponding to the task.

In this alternative implementation, the loss function of the deep learning network includes: the time loss function and the data fairness loss function, and the loss function of the deep learning network is equal to a sum of the time loss function and the data fairness loss function.

Alternatively, a weight of the time loss function is a first weight value, a weight of the data fairness loss function is a second weight value, and the loss function of the deep learning network is equal to a sum of a product value of the first weight value and the time loss function, and a product of the second weight value and the data fairness loss function.

As shown in formula (2), the loss function of the deep learning network consists of the time loss function $\mathscr{T}_m^r(\cdot)$ and the data fairness loss function $\mathscr{F}_m^r(\cdot)$. The fairness of the data has a significant impact on the convergence speed.

$$Cost_m^r(\mathcal{V}_m^r) = \alpha * \mathscr{T}_m^r(\mathcal{V}_m^r) + \beta * \mathscr{F}_m^r(\mathcal{V}_m^r)$$

$$(2)$$

where, $\alpha$ and $\beta$ are the weights of the time loss function and the data fairness loss function, respectively,

$$\mathscr{T}_m^r(\cdot)$$

represents an execution duration function in the $r^{th}$ round of training process, and

$$\mathscr{F}_m^r(\cdot)$$

is the corresponding data fairness loss function. As defined in formula (3), a training duration for a task m in each round depends on the slowest available terminal in the scheduled available terminal set.

$$\mathscr{T}_m^r(\mathcal{V}_m^r) = \max_{k \in \mathcal{V}_m^r}\{t_m^k\}$$

$$(3)$$

where, $t_m^k$ is a training duration in the $r^{th}$ round on an available terminal k. $t_m^k$ consists of a communication duration and a computation duration, which are difficult to estimate for each available terminal and vary among available terminals. The execution duration of each available terminal follows a displacement exponential distribution defined in formula (4).

$$P[t_m^k < t] = \begin{cases} 1 - e^{-\frac{\mu_k}{\tau_m D_k^m}(t - \tau_m a_k D_k^m)}, & t \geq \tau_m a_k D_k^m, \\ 0, & \text{otherwise,} \end{cases}$$

$$(4)$$

where, the parameters ak>0 and pk>0 are the maximum value and a fluctuating value of the computing and communication capabilities of the available terminal k, respectively, which are combined into a quantity. $\tau_m$ is the number of iterations for local training of an available terminal, and $D_k^m$ is the total number of samples of the task m owned by the available terminal k. In addition, due to a strong computing capability of the server and low complexity of the model, it is assumed that the computation duration of model aggregation has little impact on the training process.

The data fairness of the $r^{th}$ round corresponding to the task m is represented by the variance of the frequency of the task m scheduling each available terminal as defined in formula (5).

$$\mathscr{F}_m^r(\mathcal{V}_m^r) = \frac{1}{|\mathcal{K}|}\sum_{k \in \mathcal{K}}(s_{k,m}^r - \frac{1}{|\mathcal{K}|}\sum_{k \in \mathcal{K}}s_{k,m}^r)^2$$

$$(5)$$

where, $s^r_{k,m}$ is the frequency of scheduling the available terminal k to the task m, and $K$ and $|K|$ are a set of all available terminals and the total number of the available terminals, respectively. $s^r_{k,m}$ is calculated by counting the total number of occurrences of the available terminal k in an available terminal scheduling set { $\mathcal{V}^1_m, \cdots, \mathcal{V}^r_m$ } in the first r rounds for the task m, where $\mathcal{V}^r_m$ is an available terminal set scheduled for the task m in the rth round.

In the present embodiment, in each round of iterative training, the target terminal may be obtained by minimizing a deep learning loss function, as shown in formula (6).

$$\mathcal{V}'^r_m = \underset{\mathcal{V}^r_m \subset \{\mathcal{K} \backslash \mathcal{V}^r_o\}}{\operatorname{argmin}} TotalCost(\mathcal{V}^r_m)$$

$$( 6 )$$

where, $\mathcal{V}'^r_m$ is the target terminal for the task m in the rth round, $\mathcal{K} \backslash \mathcal{V}^r_o$ represents an available terminal set, $TotalCost(\mathcal{V}^r_m)$ is the loss function of the deep learning network, $\mathcal{K}$ and $\mathcal{V}^r_o$ are a set of all available terminals and a set of available terminals occupied in the rth round, respectively.

In this alternative implementation, the time loss function and the data fairness loss function are used together as the loss function of the deep learning network, so that the slowest available terminal among the available terminals of the deep learning model may take less time in the iterative training, and it also takes into account the fairness of data of each available terminal in the iterative training.

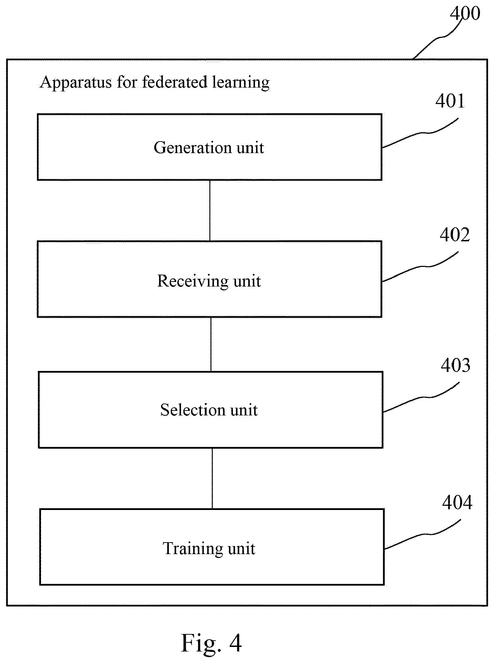

With further reference to Fig. 4, as an implementation of the method shown in the above figures, the present disclosure provides an embodiment of an apparatus for federated learning, which corresponds to the method embodiment shown in Fig. 1, and the apparatus may be specifically applied to various electronic devices.

As shown in Fig. 4, an apparatus 400 for federated learning provided by the present embodiment includes: a generation unit 401, a receiving unit 402, a selection unit 403 and a training unit 404. The generation unit 401 may be configured to generate, for each task in a plurality of different tasks trained simultaneously, a global model for each task. The receiving unit 402 may be configured to receive resource information of each available terminal in a current available terminal set. The selection unit 403 may be configured to select a target terminal corresponding to each task from the current available terminal set, based on the resource information and the global model. The training unit 404 may be configured to train the global model using the target terminal until a trained global model for each task meets a preset condition.

In the present embodiment, for the specific processing and the technical effects of the generation unit 401, the receiving unit 402, the selection unit 403 and the training unit 404 of the apparatus 400 for federated learning, reference may be made to the relevant descriptions of the steps 101, 102, 103, and 104 in the corresponding embodiment of Fig. 1 respectively, and detailed description thereof will be omitted.

In some alternative implementations of the present embodiment, the training unit 404 includes: a distribution module (not shown in the figure), a receiving module (not shown in the figure) and a determining module (not shown in the figure). The distribution module may be configured to distribute the global model to the target terminal, so that the target terminal performs local training on the global model to obtain model parameters. The receiving module may be configured to receive the model parameters returned by the target terminal, and aggregate the model parameters to obtain an updated global model. The determining module may be configured to determine, in response to the updated global model meeting the preset condition, that the trained global model for the task meets the preset condition.

In some alternative implementations of the present embodiment, the training unit 404 further includes: a replacing module (not shown in the figure). The replacing module may be configured to replace, in response to the updated global model not meeting the preset condition, the global model with the updated global model, continue to trigger operations of the receiving unit 402, the selection unit 403, the distribution module, the receiving module, and the determining module.

In some alternative implementations of the present embodiment, the selection unit 403 includes: an inputting module (not shown in the figure) and a selection module (not shown in the figure). The inputting module may be configured to input the current available terminal set, the resource information of the current available terminal set, and parameters of the global model into a pre-trained deep learning model, to obtain target terminal information output by the deep learning model, the target terminal information corresponding to the task and being used to represent a probability of invoking each available terminal in the current available terminal set; where the deep learning model is used to represent a corresponding relationship between the target terminal information and a combination of the parameters of the global model, the available terminal set and the resource information of each available terminal in the available terminal set. The selection module may be configured to select the target terminal corresponding to each task from the current available terminal set based on the target terminal information.

In some alternative implementations of the present embodiment, the deep learning model is obtained by training using units as follows: an acquisition unit (not shown in the figure), an inputting unit (not shown in the figure) and an obtaining unit (not shown in the figure). The acquisition unit may be configured to acquire sample terminals corresponding to a plurality of tasks and resource information of each sample terminal. The inputting unit may be configured to input a corresponding sample terminal, resource information of the corresponding sample terminal, and parameters of a global model during each round of iterative training of each task in the plurality of tasks into a pre-built deep learning network, to obtain target terminal information output by the deep learning network. The obtaining unit may be configured to obtain, in response to a loss value of a loss function of the deep learning network reaching a preset loss value, the deep learning model.

In some alternative implementations of the present embodiment, the loss function of the deep learning network includes: a time loss function and a data fairness loss function. The time loss function is used to represent a loss of an execution duration of a terminal invoked during each round of iterative training of the global model corresponding to the task; and the data fairness loss function is used to represent a loss of variance of a frequency of the terminal invoked during each round of iterative training of the global model corresponding to the task.

According to the apparatus for federated learning provided by an embodiment of the present disclosure, first, the generation unit 401 generates, for each task in a plurality of different tasks trained simultaneously, a global model for each task; secondly, the receiving unit 402 receives resource information of each available terminal in a current available terminal set; then, the selection unit 403 selects a target terminal corresponding to each task from the current available terminal set, based on the resource information and the global model; and finally the training unit 404 trains the global model using the target terminal until a trained global model for each task meets a preset condition. Therefore, after the global model is generated, the target terminal corresponding to the task is selected based on the global model and the resource information of each available terminal in the current available terminal set, and the target terminal is selected based on the global model for the task and the resource information of the available terminal, which improves the reliability and rationality of selecting the target terminal, fully considers the fairness of multi-task data, and improves the efficiency of multi-task federated learning.

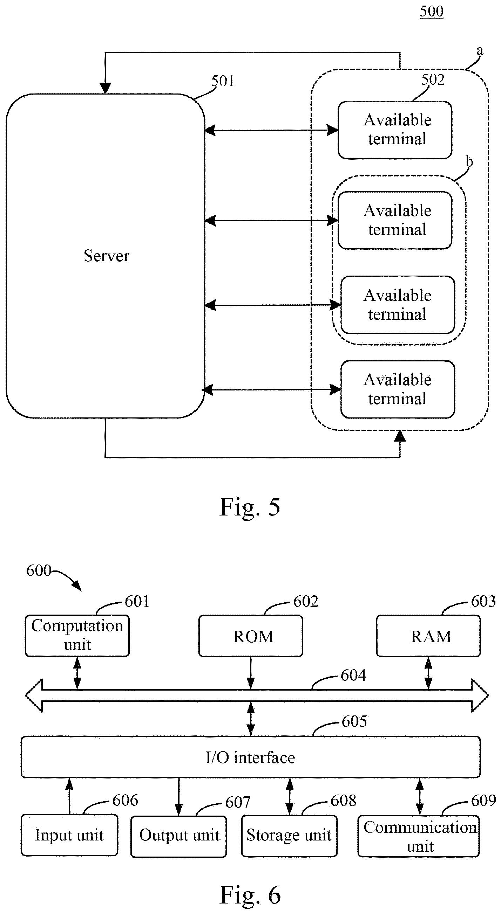

With further reference to Fig. 5, as an implementation of the method shown in the above figures, the present disclosure provides an embodiment of a system for federated learning, which corresponds to the method embodiment shown in Fig. 1, and the system may be specifically applied to various electronic devices.

As shown in Fig. 5, a system 500 for federated learning provided by the present embodiment includes: a server 501 and an available terminal set a including a plurality of available terminals 502. The server is configured to generate, for each task in a plurality of different tasks trained simultaneously, a global model for each task; receive resource information of each available terminal in a current available terminal set; select a target terminal b corresponding to each task from the current available terminal set, based on the resource information and the global model; and train the global model using the target terminal until a trained global model for each task meets a preset condition.

In the present embodiment, the server 501 may use the pre-trained deep learning model to select the target terminal b, the deep learning model is used to represent a corresponding relationship between the target terminal information and a combination of the parameters of the global model, the available terminal set and the resource information of each available terminal in the available terminal set. By using the deep learning model to select the target terminal, a convergence effect of each task in the system for federated learning in the training process may be improved.

In the present embodiment, the server 501 may be a cloud server, and the available devices 502 may be edge devices in an edge application environment.

In the technical solution of the present disclosure, the collection, storage, use, processing, transmission, provision, and disclosure of the user personal information involved are all in compliance with the relevant laws and regulations, and do not violate public order and good customs.

According to an embodiment of the present disclosure, the present disclosure also provides an electronic device, a readable storage medium, and a computer program product.

Fig. 6 illustrates a schematic block diagram of an example electronic device 600 for implementing the embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the device 600 includes a computation unit 601, which may perform various appropriate actions and processing, based on a computer program stored in a read-only memory (ROM) 602 or a computer program loaded from a storage unit 608 into a random access memory (RAM) 603. In the RAM 603, various programs and data required for the operation of the device 600 may also be stored. The computation unit 601, the ROM 602, and the RAM 603 are connected to each other through a bus 604. An input/output (I/O) interface 605 is also connected to the bus 604.

A plurality of parts in the device 600 are connected to the I/O interface 605, including: an input unit 606, for example, a keyboard and a mouse; an output unit 607, for example, various types of displays and speakers; the storage unit 608, for example, a disk and an optical disk; and a communication unit 609, for example, a network card, a modem, or a wireless communication transceiver. The communication unit 609 allows the device 600 to exchange information/data with other devices over a computer network such as the Internet and/or various telecommunication networks.

The computation unit 601 may be various general-purpose and/or dedicated processing components having processing and computing capabilities. Some examples of the computation unit 601 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computation unit 601 performs the various methods and processes described above, such as a method for federated learning. For example, in some embodiments, a method for federated learning may be implemented as a computer software program, which is tangibly included in a machine readable medium, such as the storage unit 608. In some embodiments, part or all of the computer program may be loaded and/or installed on the device 600 via the ROM 602 and/or the communication unit 609. When the computer program is loaded into the RAM 603 and executed by the computation unit 601, one or more steps of a method for federated learning described above may be performed. Alternatively, in other embodiments, the computation unit 601 may be configured to perform a method for federated learning by any other appropriate means (for example, by means of firmware).

Various embodiments of the systems and technologies described above can be implemented in digital electronic circuit system, integrated circuit system, field programmable gate array (FPGA), application specific integrated circuit (ASIC), application special standard product (ASSP), system on chip (SOC), complex programmable logic device (CPLD), computer hardware, firmware, software, and/or combinations thereof. These various embodiments may include being implemented in one or more computer programs that may be executed and/or interpreted on a programmable system including at least one programmable processor, which may be a dedicated or general programmable processor that may receive data and instructions from a storage system, at least one input device, and at least one output device, and transmit data and instructions to the storage system, the at least one input device, and the at least one output device.

Program codes for implementing the method of the present disclosure may be written in any combination of one or more programming languages. These program codes may be provided to a processor or controller of a general purpose computer, special purpose computer or other programmable apparatus or system for federated learning such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with the user, the systems and techniques described herein may be implemented on a computer having: a display device for displaying information to the user (e.g., a CRT (cathode ray tube) or LCD (liquid crystal display) monitor); a keyboard and a pointing device (e.g., mouse or trackball), through which the user can provide input to the computer. Other kinds of devices can also be used to provide interaction with users. For example, the feedback provided to the user may be any form of sensory feedback (e.g., visual feedback, auditory feedback, or tactile feedback); and the input from the user can be received in any form (including acoustic input, voice input or tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, or a server of a distributed system, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions mentioned in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

**Claims**

1. A method for federated learning, the method comprising:

   generating (101), for each task in a plurality of different tasks trained simultaneously, a global model for the each task;
   receiving (102) resource information of each available terminal in a current available terminal set;
   selecting (103) a target terminal corresponding to the each task from the current available terminal set, based on the resource information and the global model; and
   training (104) the global model using the target terminal until a trained global model for the each task meets a preset condition.

2. The method according to claim 1, wherein the training the global model using the target terminal until the trained global model for the task meets a preset condition, comprises:

   distributing (204) the global model to the target terminal, so that the target terminal performs local training on the global model to obtain model parameters;
   receiving (205) the model parameters returned by the target terminal, and aggregating the model parameters to obtain an updated global model; and
   determining, in response to the updated global model meeting the preset condition, that the trained global model for the each task meets the preset condition.

3. The method according to claim 2, wherein the method further comprises:
   performing, in response to the updated global model not meeting the preset condition, following operations until a second updated global model meets the preset condition: using the updated global model as the global model, continuing to receive second resource information of each available terminal in the current available terminal set, selecting a second target terminal corresponding to the task from the current available terminal set based on the resource information and the global model, distributing the global model to the second target terminal, receiving second model parameters returned by the second target terminal, and aggregating the second model parameters to obtain the second updated global model.

4. The method according to any one of claims 1-3, wherein the selecting a target terminal corresponding to the task from the current available terminal set, based on the resource information and the global model, comprises:

   inputting the current available terminal set, the resource information of the current available terminal set, and parameters of the global model into a pre-trained deep learning model, to obtain target terminal information output by the deep learning model, the target terminal information corresponding to the each task and being used to represent a probability of invoking each available terminal in the current available terminal set; wherein the deep learning model is used to represent a corresponding relationship between the target terminal information and a combination of the parameters of the global model, the available terminal set and the resource information of each available terminal in the available terminal set; and

selecting the target terminal corresponding to the each task from the current available terminal set based on the target terminal information.

5. The method according to claim 4, wherein the deep learning model is obtained by training using training steps as follows:

acquiring sample terminals corresponding to a plurality of sample tasks and resource information of each sample terminal;

inputting a corresponding sample terminal, resource information of the corresponding sample terminal, and parameters of a sample global model during each round of iterative training of each task in the plurality of sample tasks into a pre-built deep learning network, to obtain target terminal information output by the deep learning network; and

obtaining, in response to a loss value of a loss function of the deep learning network reaching a preset loss value, the deep learning model.

6. The method according to claim 5, wherein the loss function of the deep learning network comprises: a time loss function and a data fairness loss function; wherein,

the time loss function is used to represent a loss of an execution duration of the terminal invoked during the each round of the iterative training of the sample global model corresponding to the each task; and

the data fairness loss function is used to represent a loss of variance of a frequency of the terminal invoked during the each round of the iterative training of the sample global model corresponding to the each task.

7. An apparatus for federated learning, the apparatus comprising:

a generation unit (401), configured to generate, for each task in a plurality of different tasks trained simultaneously, a global model for the each task;

a receiving unit (402), configured to receive resource information of each available terminal in a current available terminal set;

a selection unit (403), configured to select a target terminal corresponding to the each task from the current available terminal set, based on the resource information and the global model; and

a training unit (404), configured to train the global model using the target terminal until a trained global model for the each task meets a preset condition.

8. The apparatus according to claim 7, wherein the training unit comprises:

a distribution module, configured to distribute the global model to the target terminal, so that the target terminal performs local training on the global model to obtain model parameters;

a receiving module, configured to receive the model parameters returned by the target terminal, and aggregate the model parameters to obtain an updated global model; and

a determining module, configured to determine, in response to the updated global model meeting the preset condition, that the trained global model for the each task meets the preset condition.

9. The apparatus according to claim 8, wherein the training unit further comprises:

a replacing module, configured to use, in response to the updated global model not meeting the preset condition, the updated global model as the global model, continue to trigger operations of the receiving unit, the selection unit, the distribution module, the receiving module, and the determining module.

10. The apparatus according to any one of claims 7-9, wherein the selection unit comprises:

an inputting module, configured to input the current available terminal set, the resource information of the current available terminal set, and parameters of the global model into a pre-trained deep learning model, to obtain target terminal information output by the deep learning model, the target terminal information corresponding to the task and being used to represent a probability of invoking each available terminal in the current available terminal set; wherein the deep learning model is used to represent a corresponding relationship between the target terminal information and a combination of the parameters of the global model, the available terminal set and the resource information of each available terminal in the available terminal set; and

a selection module, configured to select the target terminal corresponding to the each task from the current available terminal set based on the target terminal information.

11. The apparatus according to claim 10, wherein the deep learning model is obtained by training using units as follows:

an acquisition unit, configured to acquire sample terminals corresponding to a plurality of sample tasks and resource information of each sample terminal;

an inputting unit, configured to input a corresponding sample terminal, resource information of the corresponding sample terminal, and parameters of a sample global model during each round of iterative training of each task in the plurality of sample tasks into a pre-built deep learning network, to obtain target terminal information output by the deep learning network; and

an obtaining unit, configured to obtain, in response to a loss value of a loss function of the deep learning network reaching a preset loss value, the deep learning model.

12. The apparatus according to claim 11, wherein the loss function of the deep learning network comprises: a time loss function and a data fairness loss function; wherein,

the time loss function is used to represent a loss of an execution duration of the terminal invoked during the each round of the iterative training of the sample global model corresponding to the each task; and

the data fairness loss function is used to represent a loss of variance of a frequency of the terminal invoked during the each round of the iterative training of the sample global model corresponding to the each task.

13. A system for federated learning, the system comprising: a server (501) and an available terminal set comprising a plurality of available terminals (502), wherein the server is configured to: generate, for each task in a plurality of different tasks trained simultaneously, a global model for the each task; receive resource information of each available terminal in a current available terminal set; select a target terminal corresponding to the each task from the current available terminal set, based on the resource information and the global model; and train the global model using the target terminal until a trained global model for the each task meets a preset condition.

14. A non-transitory computer readable storage medium storing computer instructions, wherein, the computer instructions, when executed by a computer, cause the computer to perform the method according to any one of claims 1-6.

15. A computer program product, comprising a computer program, the computer program, when executed by a processor, implements the method according to any one of claims 1-6.

<u>100</u>

101

Generating, for each task in a plurality of different tasks trained simultaneously, a global model for each task

102

Receiving resource information of each available terminal in a current available terminal set

103

Selecting a target terminal corresponding to each task from the current available terminal set, based on the resource information and the global model

104

Training the global model using the target terminal until a trained global model for each task meets a preset condition

Fig. 1

200

Generating, for each task in a plurality of different tasks trained simultaneously, a global model for each task ⟋201

Receiving resource information of each available terminal in a current available terminal set ⟋202

Selecting a target terminal corresponding to each task from the current available terminal set, based on the resource information and the global model ⟋203

Distributing the global model to the target terminal, so that the target terminal performs local training on the global model to obtain model parameters ⟋204

Receiving the model parameters returned by the target terminal, and aggregating the model parameters to obtain an updated global model ⟋205

Detecting whether the updated global model meets the preset condition ⟋206

Determining that the trained global model for each task meets the preset condition ⟋207

Replacing the global model with the updated global model ⟋209

⟋208

End

Fig. 2

Fig. 3

400

Apparatus for federated learning

| Generation unit | 401 |

| Receiving unit | 402 |

| Selection unit | 403 |

| Training unit | 404 |

Fig. 4

500

a

501

502

| Server | Available terminal |

b

Available terminal

Available terminal

Available terminal

## Fig. 5

600

601 Computation unit

602 ROM

603 RAM

604

605 I/O interface

606 Input unit

607 Output unit

608 Storage unit

609 Communication unit

## Fig. 6